Europäisches Patentamt

European Patent Office

Office européen des brevets

(19)

(11) Numéro de publication : **0 530 099 B1**

(12) # FASCICULE DE BREVET EUROPEEN

(45) Date de publication du fascicule du brevet :
**02.11.95 Bulletin 95/44**

(51) Int. Cl.⁶ : **H05H 5/04, H01S 3/09**

(21) Numéro de dépôt : **92402342.7**

(22) Date de dépôt : **26.08.92**

(54) **Accélérateur électrostatique et laser à électrons libres utilisant cet accélérateur.**

(30) Priorité : **28.08.91 FR 9110672**

(43) Date de publication de la demande :
**03.03.93 Bulletin 93/09**

(45) Mention de la délivrance du brevet :
**02.11.95 Bulletin 95/44**

(84) Etats contractants désignés :
**DE FR GB IT NL**

(56) Documents cités :
**EP-A- 0 410 880**
**JP-A- 3 173 491**
**US-A- 4 361 812**
**NUCLEAR INSTRUMENTS & METHODS IN PHYSICS RESEARCH, vol. A-237, no. 1/2, 15 juin 1985, Amsterdam, pp. 203-206 ; L.R. ELIAS et al. : "The UCSB Electrostatic Accelerator Free Electron Laser : First Operation"**

(56) Documents cités :
**NUCLEAR INSTRUMENTS & METHODS IN PHYSICS RESEARCH, section A, vol. A-279, no. 3, 15 juillet 1989, Amsterdam, pp. 646-654 ; I. BOSCOLO et al. : "A Small Electrostatic Accelerator For A Powerful Continuous-Wave Free Electron Laser"**

(73) Titulaire : **COMMISSARIAT A L'ENERGIE ATOMIQUE**
**31-33, rue de la Fédération**
**F-75015 Paris (FR)**

(72) Inventeur : **Etievant, Claude**
**44 rue Saint Charles**
**F-78000 Versailles (FR)**
Inventeur : **Roche, Michel**
**12 rue de Saulx-Tavannes**
**F-21000 Dijon (FR)**

(74) Mandataire : **Dubois-Chabert, Guy et al**
**c/o BREVATOME**
**25, rue de Ponthieu**
**F-75008 Paris (FR)**

# Description

La présente invention concerne un accélérateur électrostatique comprenant :

- une colonne d'accélération,
- une tête haute tension ("high voltage terminal" dans les publications en langue anglaise) située à une extrémité de cette colonne d'accélération, et
- des moyens de transport de charges électriques.

De tels accélérateurs électrostatiques, du type Van de Graaf, sont déjà connus et ont déjà été utilisés pour accélérer des ions dans diverses études de physique nucléaire.

Ces accélérateurs électrostatiques ont actuellement d'autres applications, notamment dans le domaine des lasers à électrons libres.

Dans ce dernier domaine, les accélérateurs électrostatiques ont divers avantages :

- ils fournissent des impulsions dont les durées sont très longues par rapport aux durées des impulsions fournies par les accélérateurs haute fréquence ou impulsionnels,
- la largeur spectrale de la raie émise par un laser à électrons libres associé à un accélérateur électrostatique est très faible,
- la qualité du faisceau d'électrons accéléré par un accélérateur électrostatique est excellente et bien adaptée aux exigences des lasers à électrons libres,
- un tel accélérateur permet de récupérer, avec un excellent rendement, l'énergie du faisceau d'électrons, après passage de ce faisceau dans la cavité du laser à électrons libres associé à cet accélérateur,
- en raison de la possibilité de récupération de l'énergie du faisceau d'électrons, le rendement global du laser à électrons libres est très élevé.

Un accélérateur électrostatique du type Van de Graaff présente néanmoins un inconvénient : les moyens de transport de charges électriques qu'un tel accélérateur comporte sont réalisés à l'aide d'une courroie ou d'un autre dispositif de transport mécanique, un Pelletron ou un Laddertron par exemple.

De ce fait, dans un tel accélérateur, la valeur du courant de charge (courant correspondant auxdites charges électriques) est faible.

La présente invention a pour but de remédier à cet inconvénient et d'améliorer les performances d'un accélérateur électrostatique du type Van de Graaff en augmentant son courant de charge bien au-delà du courant-limite permis par les moyens de transport connus tels que les courroies ou les Pelletrons par exemple.

Pour ce faire, la présente invention utilise un faisceau de charges électriques (telles que des électrons ou des ions négatifs ou des ions positifs) à la place d'un dispositif mécanique de transport de charges.

De façon précise, l'accélérateur électrostatique objet de la présente invention, comprenant :

- une colonne d'accélération,
- une tête haute tension située à une extrémité de cette colonne d'accélération, et
- des moyens de transport de charges électriques,

est caractérisé en ce que les moyens de transport comprennent un accélérateur haute fréquence apte à fournir un faisceau de charges électriques pour former le courant de charge de l'accélérateur électrostatique.

Selon un mode de réalisation préféré de l'invention, l'accélérateur haute fréquence est un accélérateur haute fréquence d'électrons qui est apte à fournir un faisceau d'électrons, et les moyens de transport de charges électriques comprennent en outre des moyens d'amenée du faisceau d'électrons jusqu'à la tête haute tension dans laquelle ces électrons s'accumulent, lesdites charges électriques étant constituées par les électrons fournis par cet accélérateur haute fréquence.

En utilisant de tels moyens de transport de charges électriques, la présente invention permet de multiplier au moins par dix la valeur-limite du courant de charge qui est permise par les accélérateurs électrostatiques connus.

Un accélérateur électrostatique d'électrons conforme à l'invention est capable de produire un faisceau d'électrons accélérés (faisceau principal) dont le courant est très élevé, de l'ordre de 1 à 20 A par exemple, par recyclage de ce faisceau d'électrons et stockage des charges dans la capacité de la tête haute tension de cet accélérateur.

Dans le cas d'une utilisation avec un laser à électrons libres, la possibilité de recycler le faisceau d'électrons principal avec un rendement très élevé, supérieur à 90%, après passage de ce faisceau dans le laser, permet de faire fonctionner ce dernier avec un faisceau d'électrons principal de forte intensité (1 à 20 A) tout en maintenant le courant de charge à une valeur très inférieure, de l'ordre de 0,5 à quelques mA par exemple.

Comme il est possible de compenser une partie des pertes du faisceau d'électrons principal par un générateur électrique de basse tension, placé dans la tête haute tension de l'accélérateur électrostatique, il suffit que le courant de charge de ce dernier compense les électrons perdus dans l'onduleur magnétique ("magnetic wiggler" dans les articles en langue anglaise) du laser à électrons libres et dans les structures dans lesquelles se propage le faisceau d'électrons principal.

De ce fait, le rapport de l'intensité du courant de charge à l'intensité du faisceau d'électrons principal fourni par l'accélérateur électrostatique peut avoir une valeur très faible, de l'ordre de $2 \times 10^{-4}$ à $3 \times 10^{-4}$.

Un accélérateur haute fréquence, de performances classiques, est en mesure de fournir un tel courant de charge à un accélérateur électrostatique dont les performances sont nettement supérieures à celles de l'accélérateur haute fréquence.

Selon un mode de réalisation particulier de l'accélérateur électrostatique objet de la présente invention, l'accélérateur haute fréquence que ce dernier comporte est constitué par une structure comportant :

- une cavité formée d'un conducteur cylindrique extérieur et d'un conducteur cylindrique intérieur qui sont coaxiaux,
- une source haute fréquence alimentant la cavité en champ électromagnétique à une fréquence de résonance de la cavité, la composante radiale du champ présentant un maximum dans au moins un plan perpendiculaire à l'axe commun au conducteur extérieur et au conducteur intérieur, ces conducteurs extérieur et intérieur de la cavité étant percés d'ouvertures diamétralement opposées situées dans le plan pour l'introduction du faisceau d'électrons dans la cavité et son extraction dans ce plan,

cet accélérateur haute fréquence comprenant en outre au moins un déflecteur d'électrons apte à dévier le faisceau d'électrons ayant traversé la cavité selon un diamètre tout en le gardant dans le plan et à le réinjecter dans la cavité selon un autre diamètre.

Un accélérateur haute fréquence ayant cette structure est appelé Rhodotron (marque déposée).

Un tel accélérateur est décrit dans les documents (1) à (3) qui, comme les autres documents cités par la suite, sont mentionnés à la fin de la présente description.

Dans un accélérateur électrostatique conforme à la présente invention, les moyens d'amenée du faisceau d'électrons peuvent comprendre une colonne de décélération des électrons issus de l'accélérateur haute fréquence.

L'accélérateur électrostatique objet de la présente invention peut être prévu pour accélérer des électrons et comprendre en outre des moyens de récupération des électrons qu'il a accélérés et qui ont ensuite été utilisés, ces moyens de récupération comprenant une colonne de décélération de ces électrons qui ont été utilisés.

Dans ce cas, selon un mode de réalisation avantageux de cet accélérateur électrostatique, permettant de simplifier la structure de ce dernier et donc d'en réduire le coût, les trois colonnes, à savoir la colonne d'accélération, la colonne de décélération que comprennent les moyens d'amenée et la colonne de décélération que comprennent les moyens de récupération, ont la même structure, et l'accélérateur électrostatique comprend un tube unique en lequel les trois colonnes sont regroupées et qui est prévu pour l'accélération des électrons destinés à être fournis par cet accélérateur électrostatique, la décélération des électrons issus de l'accélérateur haute fréquence et la décélération des électrons qui ont été utilisés.

L'accélérateur électrostatique objet de la présente invention s'applique notamment à la réalisation d'un laser à électrons libres.

La présente invention a également pour objet un laser à électrons libres comprenant :

- un accélérateur électrostatique d'électrons, apte à fournir un faisceau d'électrons, et
- un onduleur magnétique qui est traversé par ce faisceau d'électrons, ce laser à électrons libres étant caractérisé en ce que l'accélérateur électrostatique est celui qui est également l'objet de la présente invention et qui comprend un accélérateur haute fréquence d'électrons.

Enfin, lorsque l'accélérateur électrostatique objet de l'invention comprend les moyens de récupération mentionnés plus haut, ces derniers peuvent être prévus pour récupérer les électrons qui ont traversé l'onduleur magnétique, la colonne de décélération, que comprennent ces moyens de récupération, communiquant avec cet onduleur magnétique.

La présente invention sera mieux comprise à la lecture de la description d'exemples de réalisation donnés ci-après à titre purement indicatif et nullement limitatif, en faisant référence aux dessins annexés sur lesquels :

- la figure 1 est une vue schématique d'un système connu de laser à électrons libres, ce système comprenant un accélérateur électrostatique connu, de type Van de Graaf,
- la figure 2 est une vue schématique de l'accélérateur électrostatique faisant partie du système représenté sur la figure 1,
- la figure 3 est le schéma électrique d'un accélérateur électrostatique du genre de celui qui est représenté sur la figure 2,
- la figure 4 illustre schématiquement un mode de réalisation particulier de l'accélérateur électrostatique objet de la présente invention,
- la figure 5 est une vue schématique d'un accélérateur haute fréquence que comporte l'accélérateur électrostatique représenté sur la figure 4,
- les figures 6 et 7 illustrent schématiquement deux modes de réalisation particuliers d'un tube accélérateur ou décélérateur que comprend l'accélérateur électrostatique représenté sur la figure 4,
- la figure 8 est une vue schématique d'un mode de réalisation particulier d'un collecteur d'électrons que comporte l'accélérateur électrostatique représenté sur la figure 4,
- la figure 9 est une vue schématique et partielle d'un tube à faisceau multiple que peut comporter un accélérateur électrostatique conforme à la présente invention, et

- les figures 10 à 13 illustrant de façon schématique des applications de l'invention à l'accélération d'ions.

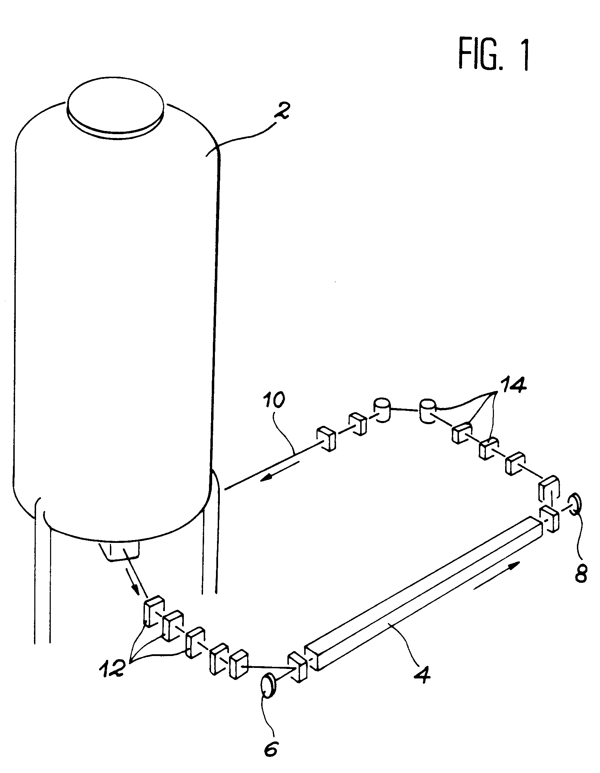

Le système de laser à électrons libres, qui est schématiquement représenté sur la figure 1 et qui comporte un accélérateur électrostatique connu, de type Van de Graaff, est installé à l'Université de Californie-Santa Barbara (UCSB).

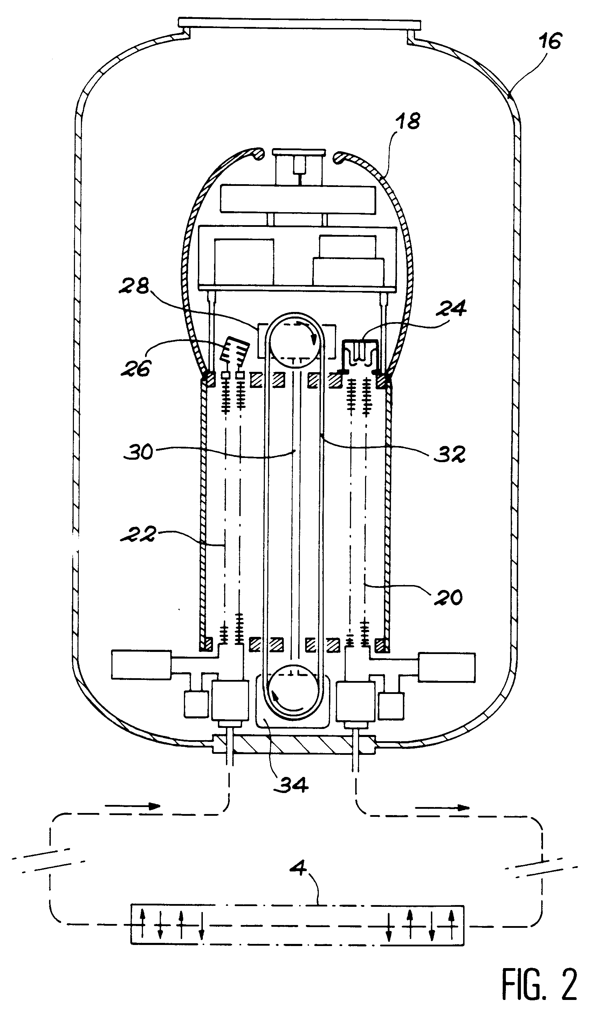

La figure 2 est une vue schématique de cet accélérateur électrostatique connu.

En ce qui concerne les accélérateurs électrostatiques pour lasers à électrons libres et, en particulier, en ce qui concerne le système de laser à électrons libres installé à l'Université de Californie-Santa Barbara, on se reportera aux documents (4) à (7).

Le système de laser à électrons libres schématiquement représenté sur la figure 1 comprend :

- un accélérateur électrostatique 2, de type Van de Graaf,
- un onduleur magnétique 4 faisant partie du laser à électrons libres,
- des miroirs 6 et 8 qui sont parallèles et disposés de part et d'autre de l'onduleur 4 et qui forment une cavité résonante,
- une canalisation 10 dans laquelle on a fait le vide et dans laquelle se propage le faisceau d'électrons produit par l'accélérateur électrostatique 2, une partie de cette canalisation 10 partant de cet accélérateur 2 pour aller jusqu'à un côté de l'onduleur, tandis que l'autre partie de cette canalisation 10 part de l'autre côté de l'onduleur pour retourner jusqu'à l'accélérateur électrostatique 2, et
- divers moyens de transport et d'adaptation qui sont placés le long du conduit 10.

Certains 12 de ces moyens sont prévus pour transporter le faisceau d'électrons dans le conduit 10 et adapter ce faisceau au système onduleur-résonateur du laser à électrons libres.

Le reste 14 de ces moyens est prévu pour transporter jusqu'à l'accélérateur 2 le faisceau d'électrons qui est issu de l'onduleur 4 et pour adapter ce faisceau au tube de décélération que comporte l'accélérateur électrostatique 2.

Ainsi, le faisceau d'électrons produit par l'accélérateur électrostatique 2 traverse l'onduleur 4, où il permet de produire un faisceau lumineux cohérent, puis retourne à l'accélérateur électrostatique 2.

Ce dernier est placé dans une enceinte fermée 16 (voir la figure 2) qui est remplie de $SF_6$ gazeux.

Cet accélérateur électrostatique 2 comprend :

- une tête haute tension 18 qui est portée à un potentiel électrique égal à -3MV,
- un tube accélérateur 20, ou colonne d'accélération, placé à l'extrémité de la tête haute tension et prévu pour accélérer le faisceau d'électrons produit par l'accélérateur 2, qui est appelé faisceau principal, et

- un tube décélérateur 22, ou colonne de décélération, qui récupère le faisceau principal après passage de celui-ci dans l'onduleur 4 et qui décélère ce faisceau d'électrons principal.

Ce tube décélérateur 22 est aussi placé à l'extérieur de la tête haute tension.

L'accélérateur électrostatique comprend également, à l'intérieur de la tête haute tension 18 :

- un canon à électrons 24 et des moyens d'alimentation électrique de ce dernier (non représentés), ce canon à électrons étant capable de produire un faisceau d'électrons de 50keV, ces électrons étant ensuite accélérés dans le tube accélérateur 20,
- un collecteur d'électrons 26 ainsi que des moyens (non représentés) prévus pour polariser les électrodes de ce collecteur 26 à des tensions convenables valant respectivement -40kV, -43,3kV, -46,7kV et -50kV, ce collecteur d'électrons étant prévu pour collecter les électrons du faisceau principal lorsque ce dernier a traversé le tube décélérateur, et
- un générateur électrique 28 de 10kW qui est destiné à alimenter les divers appareils situés à l'intérieur de la tête haute tension 18.

L'accélérateur électrostatique 2 comprend en outre :

- un arbre tournant 30 qui est fait d'une matière électriquement isolante et qui est capable de supporter une différence de potentiel de 3MV entre ses extrémités, cet arbre entraînant mécaniquement le générateur 28 qui est porté à la haute tension (3MV), et
- une chaîne Pelletron 32 qui apporte à la tête haute tension 18 un courant de l'ordre de 500 microampères, de façon à compenser les pertes d'électrons du faisceau principal dans la boucle que ce dernier parcourt entre la colonne d'accélération 20 et la colonne de décélération 22, et
- un moteur 34 qui entraîne la chaîne Pelletron 32.

On précise que le schéma représenté sur la figure 2 est extrait du document (4).

Comme on l'a déjà indiqué, il est connu d'utiliser une courroie pour transporter les charges électriques depuis le potentiel de la masse jusqu'à la haute tension dans un accélérateur électrostatique du type Van de Graaff.

Pour cette question, on se reportera par exemple au document (8).

Pour transporter les charges électriques, on peut utiliser à la place d'une telle courroie une chaîne Pelletron comme c'est le cas dans le système réalisé à l'Université de Californie-Santa Barbara.

On connaît d'autres chaînes Pelletron, par exemple :

- la chaîne Pelletron de la société N.E.C. (National Electrostatic Corporation-USA) au sujet de laquelle on pourra consulter le document (9), et
- la chaîne Pelletron qui est utilisée en plusieurs exemplaires dans l'accélérateur tandem de l'Université de Yale (voir le document (10)).
- On connaît également un dispositif mécanique de transport des charges électriques qui est comparable au Pelletron et qui est appelé Laddertron.

Ce dernier est utilisé dans l'accélérateur tandem de Daresbury (voir le document (11)).

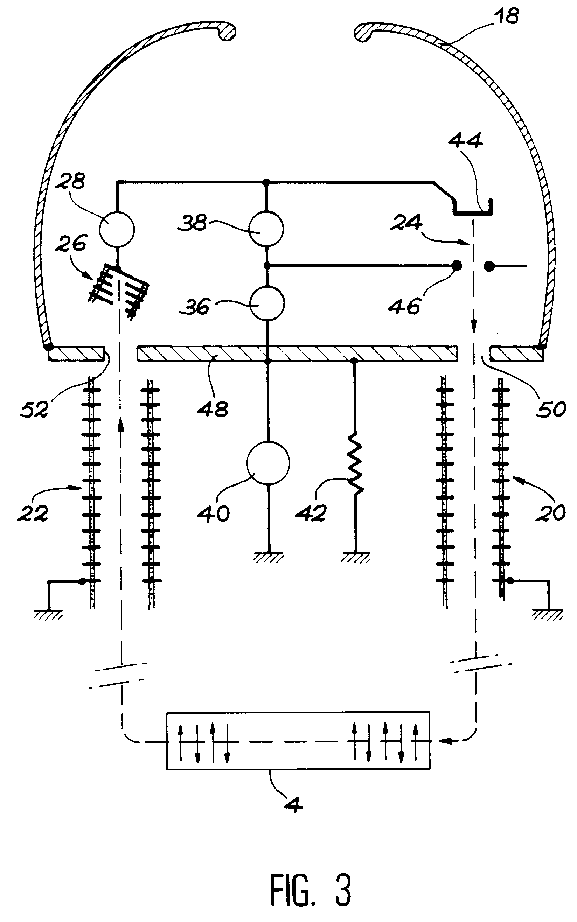

Le schéma électrique d'un accélérateur électrostatique du type Van de Graaff, avec récupération du faisceau d'électrons, du genre de celui qui est mis en oeuvre dans le système de laser à électrons libres qui est installé à l'Université de Californie - Santa Barbara, est représenté sur la figure 3.

On voit sur cette figure 3 la tête haute tension 18 qui est portée à un potentiel électrique U par rapport à la masse.

Le potentiel U est par exemple égal à -3MV comme on l'a déjà indiqué plus haut.

Dans la tête haute tension 18, on trouve :

- le canon à électrons 24,
- le collecteur de faisceau 26,
- le générateur de puissance 28 (générateur de 10kW dans l'exemple représenté sur la figure 2), et
- un premier générateur 36 et un deuxième générateur 38 qui sont prévus pour ajuster les tensions de polarisation des électrodes du canon à électrons 24.

Sur le schéma de la figure 3, on voit également à l'extérieur de la tête haute tension 18 :

- le tube accélérateur 20,
- le tube décélérateur 22,
- un générateur de charge 40 qui, dans le cas de la figure 2, est constitué par la chaîne Pelletron 32,
- un circuit de fuites 42 qui correspond à une décharge par effet Corona ainsi qu'aux résistances de polarisation du tube accélérateur 20 et du tube décélérateur 22, et
- l'onduleur 4 du laser à électrons libres qui utilise l'accélérateur électrostatique.

Le canon à électrons 24 comprend une cathode émettrice d'électrons 44 et une électrode 46 prévue pour accélérer les électrons émis par la cathode 44.

Le générateur 28 est prévu pour maintenir constant le potentiel électrique de chacun des plateaux de collection du collecteur 26 par rapport au potentiel de la cathode 44 du canon à électrons.

On voit également sur la figure 3 une plaque électriquement conductrice 48 qui ferme la tête haute tension 18 et qui est portée au potentiel U.

Les électrons émis par la cathode 44 sont accélérés par l'électrode 46 puis traversent un trou de sortie 50 que comporte la plaque 48.

Ensuite, les électrons traversent successivement le tube accélérateur 20, l'onduleur 4 et le tube décélérateur 22.

Les électrons traversent ensuite un trou d'entrée 52 que comporte la plaque 48 et sont récupérés par le collecteur 26.

Comme on le voit sur la figure 3, la branche du schéma électrique, sur laquelle se trouve le générateur de charge 40 est d'un côté à la masse et de l'autre côté au potentiel U.

L'intensité du courant fourni par le générateur de charge 40 est notée Ich.

L'intensité du courant du faisceau d'électrons issus de l'accélérateur représenté sur la figure 3 est notée I et l'intensité du courant de recyclage correspondant au faisceau d'électrons qui est récupéré par cet accélérateur est notée Ir.

Le circuit de fuites 42 est d'un côté à la masse et de l'autre côté au potentiel U.

L'intensité du courant de fuites correspondant est notée If.

Les générateurs 28, 36 et 38 sont entraînés par un arbre rotatif qui n'est pas représenté sur la figure 3 mais qui l'est sur la figure 2 (référence 30).

Les générateurs 36 et 38 appartiennent à une même branche du circuit représenté sur la figure 3 et le générateur 38 est relié d'un côté au générateur 36 et porté, de l'autre côté, au même potentiel que la cathode 44 du canon à électrons 24.

L'électrode accélératrice 46 est reliée à la borne qui est commune aux générateurs 36 et 38.

Le générateur 36, qui est donc relié d'un côté au générateur 38 et à l'électrode 46, est porté de l'autre côté au potentiel de la plaque 48 (potentiel U).

On peut définir le taux de récupération $\underline{n}$ de l'accélérateur électrostatique représenté sur la figure 3 comme le rapport Ir/I.

Dans le système installé à l'Université de Californie - Santa Barbara, ce taux de récupération est de l'ordre de 0,95 à 0,97 lorsque le laser à électrons libres fonctionne.

Une augmentation de l'intensité Ich du courant de charge de l'accélérateur électrostatique permet de réduire l'intervalle de temps entre deux impulsions du canon à électrons 24.

Une telle augmentation permet également d'améliorer la stabilité spectrale des impulsions lumineuses émises par le laser à électrons libres qui est associé à l'accélérateur électrostatique représenté sur la figure 3.

Dans un accélérateur électrostatique connu, de type Van de Graaff, du genre de celui qui est représenté sur la figure 3, l'intensité i1 du courant électrique transporté par le dispositif mécanique de transport des charges depuis la masse jusqu'à la tête haute tension peut s'exprimer par la formule suivante :

$$i1 = s \times V$$

dans laquelle s représente la densité linéique des charges électriques et V représente la vitesse de ce dispositif mécanique (vitesse de la courroie ou vitesse de la chaîne Pelletron ou vitesse de la chaîne Laddertron).

Pour augmenter l'intensité de ce courant de charge, il faudrait augmenter la densité linéique des charges et donc la largeur du support de charge (largeur de la courroie ou largeur des plaques de la chaîne) et/ou augmenter la vitesse V de translation des charges électriques.

Toutes ces augmentations conduiraient à des difficultés technologiques (vibrations, amorçages, usure, augmentation des dimensions) et à des coûts importants.

Selon la présente invention, on remplace le dispositif mécanique de transport des charges par un faisceau de charges électriques, de préférence un faisceau d'électrons, provenant d'un accélérateur haute fréquence.

Dans ce cas, l'intensité i2 du courant des charges électriques peut s'exprimer par la formule suivante :

$$i2 = e.N.S. v$$

Dans cette formule :

e représente la charge électrique de l'électron (en valeur absolue),

N représente la densité électronique du faisceau d'électrons issu de l'accélérateur haute fréquence,

S représente la section transversale de ce faisceau, et

v représente la vitesse des électrons dans ce faisceau.

On peut considérer que la vitesse des électrons du faisceau est d'environ $10^7$ fois supérieure à la vitesse V du dispositif mécanique de transport de charge.

Compte tenu du rapport considérable entre ces vitesses V et v, la présente invention permet d'obtenir des courants de charge beaucoup plus élevés que les courants de charge autorisés par les dispositifs mécaniques de transport de charge des accélérateurs électrostatiques connus, de type Van de Graaff.

Dans la présente invention, pous injecter le courant de charge, on peut utiliser l'accélérateur haute fréquence appelé Rhodotron (marque déposée) dont il a été question plus haut.

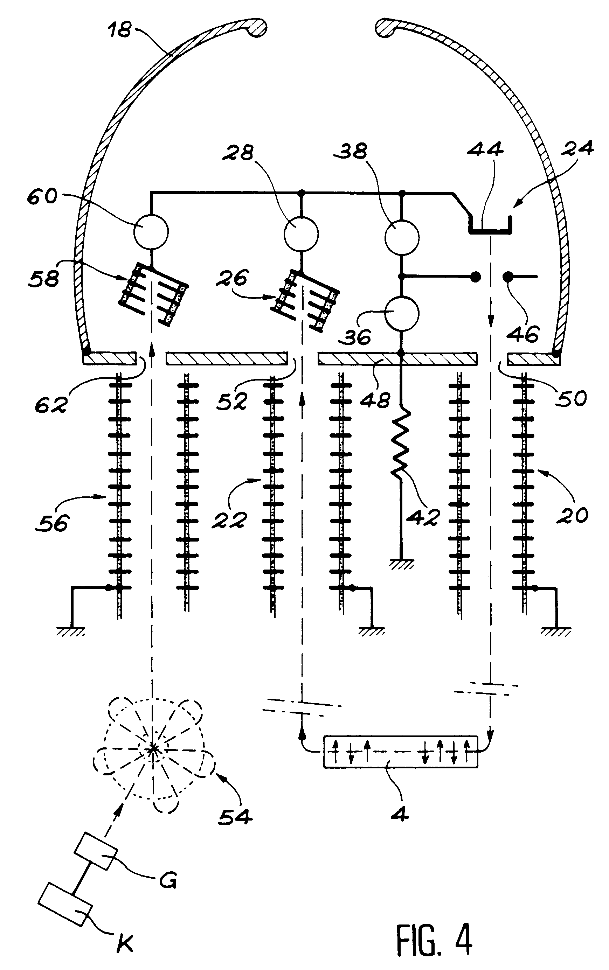

L'accélérateur électrostatique conforme à l'invention qui est représenté sur la figure 4 est identique à celui qui est représenté sur la figure 3 excepté que le générateur de charge 40 (chaîne Pelletron par exemple) est remplacé par un ensemble comprenant un Rhodotron (marque déposée) qui porte la référence 54, un tube décélérateur, ou colonne de décélération, supplémentaire 56, un collecteur d'électrons supplémentaire 58 et un générateur supplémentaire 60.

Dans l'accélérateur électrostatique de la figure 4, les générateurs 28, 36 et 38 sont encore entraînés par un arbre rotatif électriquement isolant non représenté, lui-même entraîné en rotation par un moteur non représenté ; tout autre mécanisme d'entraînement insensible à la haute tension est éventuellement utilisable.

Ces générateurs sont commandés à distance en tension par un dispositif insensible à la haute tension, une commande infrarouge par exemple.

Le générateur 28 est de préférence asservi à la puissance électromagnétique émise par le laser.

L'accélérateur haute fréquence 54 permet d'envoyer, vers la tête haute fréquence 18, un faisceau d'électrons d'intensité et d'énergie convenables.

La colonne de décélération 56, qui est semblable à la colonne de décélération 22, est située à l'extérieur de la tête haute fréquence 18 et prévue pour décélérer le faisceau d'électrons issu de l'accélérateur haute fréquence 54.

Ce faisceau d'électrons ainsi décéléré pénètre dans la tête haute tension par une ouverture 62 réalisée dans la plaque conductrice 48.

Le collecteur de charges supplémentaire 58 est situé dans la tête haute tension 18 et semblable au collecteur 26.

Ce collecteur 58 est prévu pour collecter le faisceau d'électrons décéléré qui a pénétré dans la tête haute tension 18 par l'ouverture 62.

Le générateur supplémentaire 60 est prévu pour maintenir constant le potentiel électrique de chacun des plateaux de collection du collecteur 58 par rapport au potentiel de la cathode 44 du canon à électrons 24.

Ce générateur 60 est réglable en tension grâce à une commande à distance et, de préférence asservi à suivre les variations de l'énergie du faisceau émis par l'accélérateur haute fréquence 54.

Un tube non représenté relie de façon étanche l'accélérateur haute fréquence 54 à la colonne de décélération supplémentaire 56 et cette dernière est reliée de façon étanche au collecteur supplémentaire 58, de sorte que l'accélérateur haute fréquence 54, la colonne de décélération supplémentaire 56 et le collecteur 58 forment une même enceinte étanche.

Un système de pompage non représenté est prévu pour faire le vide dans cette enceinte (pression de l'ordre de $10^{-4}$ à $10^{-5}$ Pa).

Bien entendu, le faisceau d'électrons principal, qui est issu de l'accélérateur électrostatique de la figure 4 et qui y retourne après avoir traversé l'onduleur 4, se propage dans une autre enceinte étanche qui va du canon à électrons 24 jusqu'au collecteur 26 en passant successivement par la colonne d'accélération 20, l'onduleur 4 et la colonne de décélération 22.

Des moyens de pompage non représentés sont prévus sur cette autre enceinte étanche, dans laquelle se déplace le faisceau d'électrons principal, pour y faire le vide.

Des moyens de polarisation appropriés, non représentés sont prévus pour polariser respectivement les divers plateaux de chacune des colonnes 20, 22 et 56.

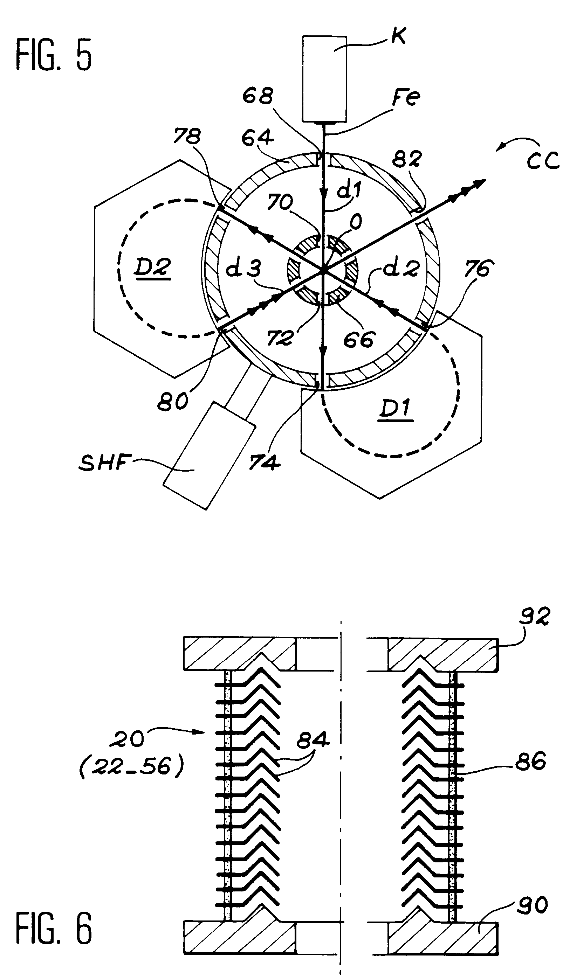

Un exemple de réalisation du Rhodotron (marque déposée) 54, qui est utilisable dans l'accélérateur de la figure 4, est schématiquement représenté sur la figure 5.

Il comprend une source haute fréquence SHF, une source d'électrons K, une cavité coaxiale CC, ainsi que deux déflecteurs D1 et D2.

La cavité coaxiale CC est formée d'un conducteur cylindrique extérieur 64 et d'un conducteur cylindrique intérieur 66.

La source d'électrons K émet un faisceau d'électrons Fe qui est contenu dans un plan perpendiculaire à l'axe de la cavité coaxiale CC.

Ce plan rencontre cet axe en un point 0, la figure 5 étant une vue en coupe transversale suivant ce plan.

Ce faisceau pénètre dans la cavité CC par une ouverture 68.

Il traverse la cavité CC selon un premier diamètre d1 du conducteur extérieur 64.

Le conducteur intérieur 66 est percé de deux ouvertures 70 et 72 qui sont diamétralement opposées et qui sont successivement traversées par le faisceau.

Le faisceau d'électrons est accéléré par le champ électrique si des conditions de phases et de fréquences sont satisfaites (ce champ électrique doit rester de sens opposé à la vitesse des électrons).

Le faisceau accéléré sort de la cavité coaxiale CC par une ouverture 74 qui est diamétralement opposée à l'ouverture 68.

Il est ensuite défléchi par le déflecteur d'électrons D1.

Le faisceau est réintroduit dans la cavité CC par une ouverture 76.

Il emprunte alors un second diamètre d2 et subit dans la cavité coaxiale CC une seconde accélération.

Il ressort par une ouverture 78 qui est diamétralement opposée à l'ouverture 76.

A sa sortie, le faisceau est à nouveau défléchi par le déflecteur D2 puis réintroduit dans la cavité coaxiale CC par une ouverture 80.

Il emprunte alors un troisième diamètre d3 et subit une troisième accélération puis ressort de la cavité coaxiale CC par une ouverture 82 diamétralement opposée à l'ouverture 80.

En fait, le Rhodotron (marque déposée) peut être conçu de façon que le faisceau d'électrons qu'il accéléré rentre et sorte un plus grand nombre de fois de la cavité coaxiale CC.

Ceci est le cas du Rhodotron (marque déposée) 54 qui est schématiquement et partiellement représenté sur la figure 4 où la trajectoire des électrons a la forme d'une rosace (d'où le nom de cet accélérateur haute fréquence).

On voit sur la figure 4 qu'un groupeur G peut être éventuellement placé sur la trajectoire du faisceau fourni par la source d'électrons K avant que ce faisceau ne pénètre pour la première fois dans l'accélérateur 54.

On peut utiliser un tube commercialement disponible auprès de la société N.E.C. (National Electrostatic Corporation - USA) pour réaliser chacune des colonnes 20, 22 et 56.

Ce tube est schématiquement représenté sur la figure 6 et comprend des électrodes annulaires internes 84 qui sont électriquement isolées les unes des autres par des segments tubulaires et électriquement isolants 86, ces derniers étant raccordés de façon étanche les uns aux autres.

Le tube ainsi obtenu comporte des brides 90 et 92 respectivement en ses deux extrémités.

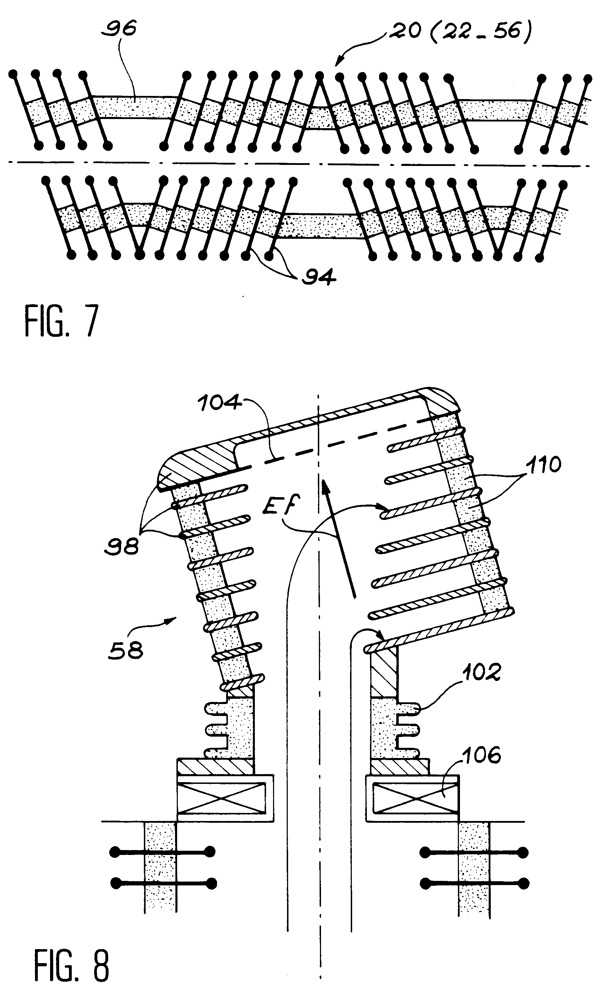

Un autre tube connu, qui est également utilisable pour réaliser chacune des colonnes 20, 22 et 56, est schématiquement et partiellement représenté sur la figure 7.

Ce tube de la figure 7, qui est appelé "tube à champ incliné", comprend des séries d'anneaux conducteurs équipotentiels espacés 94 dont les inclinaisons alternent et qui sont reliées les unes aux autres par des anneaux électriquement isolants 96, le tout formant un ensemble étanche.

Un exemple de réalisation du collecteur 58 (qui est du genre du collecteur 26) est schématiquement représenté sur la figure 8.

Le collecteur 58 représenté sur cette figure 8 comprend une succession d'électrodes, ou plateaux, de collection 98 qui sont séparées les unes des autres par des anneaux électriquement isolants 100.

Un élément tubulaire électriquement isolant 102 sépare le collecteur 58 du tube décélérateur correspondant 56.

On voit également sur la figure 8 une grille 104 qui est prévue pour repousser les électrons secondaires qui sont engendrés dans le collecteur 58 de la figure 8.

On voit également une bobine de focalisation 106 qui est montée à la sortie du tube décélérateur 56 et qui est prévue pour focaliser le faisceau d'électrons à la sortie de ce tube décélérateur 56, avant que ce faisceau ne pénètre dans le collecteur 58.

Les différents plateaux 98 sont portés à des potentiels appropriés de manière à créer un champ électrique de freinage Ef dont le sens va du premier plateau (situé du côté du tube décélérateur 56) vers le dernier plateau (qui est le plus éloigné de ce tube décélérateur 56).

On précise qu'une telle structure de collecteur est déjà connue et que la polarisation de chacune des électrodes 98 est choisie de façon à récupérer le mieux possible l'énergie de l'ensemble des électrons du faisceau issu du tube décélérateur 56.

Les plateaux 98 sont refroidis par des moyens non représentés, par exemple par une circulation de $SF_6$ dans un tube thermiquement conducteur qui est soudé autour de chacun des plateaux 98.

On a déjà indiqué la similitude des colonnes 20, 22 et 56 qui sont respectivement prévues pour l'accélération du faisceau principal, la décélération de ce faisceau principal (après utilisation de celui-ci et avant collection du faisceau utilisé) et la décélération du faisceau de charge.

Dans un mode de réalisation particulier de l'invention, moins coûteux que celui qui est représenté sur la figure 4, ces trois colonnes 20, 22 et 56 sont réunies en une seule colonne qui est prévue pour l'accélération du faisceau principal, pour la décélération du faisceau principal et pour la décélération du faisceau de charge.

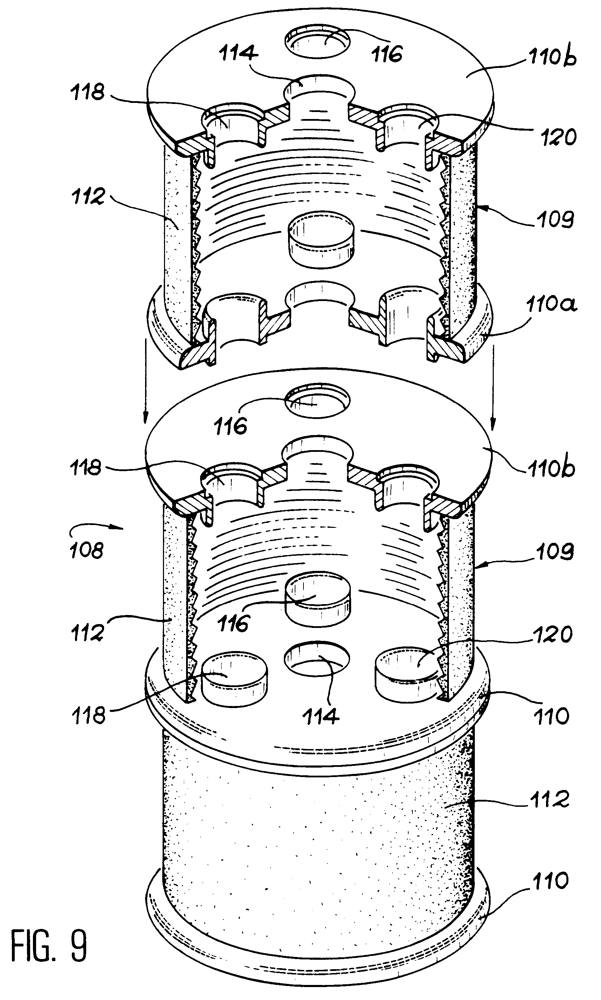

Cette colonne unique est schématiquement et partiellement représentée sur la figure 9 où elle porte la référence 108.

Cette colonne 108 comprend des plaques parallèles et électriquement conductrices 110 qui sont raccordées de façon étanche les unes aux autres par des éléments tubulaires et électriquement isolants 112.

Dans l'exemple représenté sur la figure 9, la colonne 108 est un assemblage étanche de tronçons 109, chaque tronçon 109 comprenant un élément 112 et, de part et d'autre de celui-ci, deux demi-plaques 110a et 110b, chaque plaque 110 étant l'assemblage étanche de deux demi-plaques adjacentes comme on le voit sur la figure 9.

Les plaques 110 et les éléments tubulaires 112 ont le même axe qui constitue l'axe de la colonne 108.

Chaque plaque 110 comporte quatre ouvertures 114, 116, 118 et 120, toutes ces ouvertures étant dans le volume délimité par les éléments tubulaires 112.

Les ouvertures 114 sont placées au centre des plaques 110 et ont toutes le même axe qui est l'axe de cette colonne 108.

Ces ouvertures 114 sont des orifices de pompage permettant de faire le vide dans la colonne 108.

Sur chaque plaque 110, les ouvertures 116, 118 et 120 sont placées à 120° les unes des autres autour de l'ouverture 114 de cette plaque 110.

De plus, les ouvertures 116 des plaques 110 sont coaxiales et sont prévues pour le passage du faisceau principal accéléré.

Les ouvertures 118 des plaques 110 sont coaxiales et prévues pour le passage du faisceau principal décéléré.

Les ouvertures 120 des plaques 110 sont coaxiales et prévues pour le passage du faisceau de charge décéléré.

Des moyens non représentés sont prévus pour porter les plaques ou électrodes 110 à des potentiels appropriés à ladite accélération et auxdites décélérations.

Ces potentiels sont répartis, de façon connue, par exemple par l'intermédiaire de fortes résistances électriques (non représentées).

Bien entendu, les ouvertures 120 qui sont respectivement situées aux deux extrémités de la colonne 108 sont raccordées respectivement au collecteur 58 et au conduit non représenté qui amène les électrons en provenance de l'accélérateur haute fréquence 54.

Les ouvertures 118 qui sont respectivement situées aux deux extrémités de la colonne 108 sont raccordées de façon étanche respectivement aux collecteurs 26 et au conduit qui amène les électrons qui ont traversé l'onduleur 4.

Les ouvertures 116 qui sont formées sur les plaques 110 placées aux deux extrémités de la colonne 108 sont raccordées de façon étanche respectivement au canon à électrons 24 et au conduit non représenté qui emmène les électrons accélérés jusqu'à l'onduleur 4.

Bien entendu, il est alors possible d'utiliser un système de pompage commun aux trois faisceaux mentionnés plus haut, ce pompage étant possible grâce aux orifices 114.

Une atmosphère de $SF_6$ gazeux est prévue à l'extérieur de la colonne 108 (cas de la figure 9) ou à l'extérieur des colonnes 20, 22 et 56 (cas de la figure 4) et également dans la tête haute tension 18.

Dans la description précédente, l'accélérateur électrostatique de l'invention a été présenté dans son application préférentielle qui est celle du laser à électrons libres.

L'invention n'est pas limitée à cette application.

En particulier, l'accélérateur électrostatique selon l'invention peut être utilisé pour :

- l'accélération de forts courants d'ions positifs, à partir d'une source d'ions positifs au potentiel de la masse vers une cible placée dans la tête haute tension (expériences de physique nucléaire),
- l'accélération de forts courants d'ions négatifs, à partir d'une source d'ions négatifs placée dans la tête haute tension vers une cible portée au potentiel de la masse (application au chauffage des plasmas dans les expériences de fusion contrôlée),
- l'accélération de forts courants ioniques utilisant la configuration des accélérateurs tandem, la tête haute tension contenant alors le dispositif de conversion des ions négatifs en ions positifs, qui est caractéristique des accélérateurs tandem.

Si Er est l'énergie du faisceau d'électrons émis par l'accélérateur haute fréquence (un Rhodotron par exemple) et si les ions à accélérer sont n fois chargés, l'énergie finale Ei à laquelle on peut accélérer ces ions est telle que :

$$Ei = n \times Er \quad (1)$$

Typiquement Er est compris entre 1MeV et 20MeV et $\underline{n}$ peut varier de 1 à des valeurs supérieures à 10 suivant les cas.

Le faisceau d'ions à accélérer peut être représenté par une suite d'impulsions de durée $\underline{t}$ et de période T. Si Ir représente le courant moyen du faisceau d'électrons fourni par le Rhodotron, le courant-crête Ii des impulsions d'ions en régime continu vaut :

$$Ii = Ir \times T/t$$

Typiquement Ir est de l'ordre de 10 à 20mA.

Un accélérateur conforme à l'invention, utilisant un accélérateur haute fréquence d'électrons, présente les avantages suivants pour l'accélération d'ions : il est capable d'accélérer des faisceaux d'ions intenses en régime d'impulsions longues ou même en régime continu ; il permet d'obtenir des énergies ioniques élevées, comme le montre la relation (1) ; il permet de compenser les variations de tension pendant les impulsions de courant ionique ; il permet l'émission de faisceaux d'ions de puissance élevée.

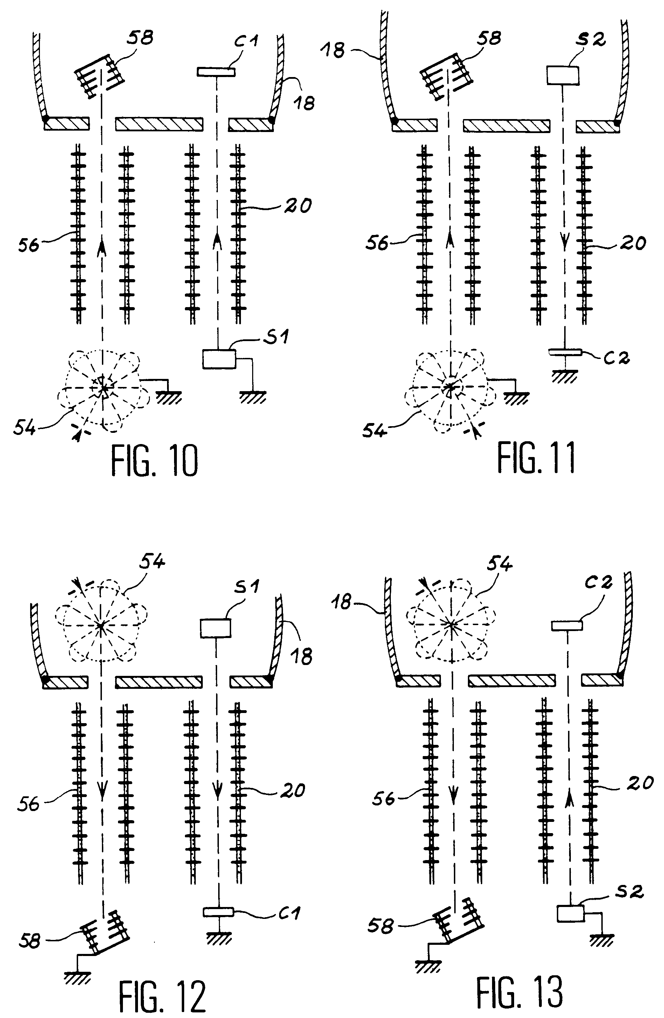

Sur les figures 10 à 13, on a représenté de façon schématique des exemples d'accélérateurs conformes à l'invention, prévus pour accélérer des ions. La configuration de ces accélérateurs dépend de la polarité des ions à accélérer (ions positifs ou ions négatifs).

Dans le cas de la figure 10, on utilise une source d'ions positifs S1. Celle-ci- et le Rhodotron 54 sont mis à la masse. La colonne accélératrice du faisceau d'électrons et la colonne accélératrice du faisceau d'ions portent respectivement les références 56 et 20. Le collecteur 58 du faisceau d'électrons et la cible réceptrice C1 du faisceau d'ions sont situés dans la tête haute tension 18 qui est portée à un potentiel négatif.

Dans le cas de la figure 11, on utilise une source d'ions négatifs S2. Le Rhodotron 54 et la cible réceptrice C2 du faisceau d'ions sont mis à la masse. Le collecteur 58 du faisceau d'électrons et la source d'ions S2 sont dans la tête haute tension 18 qui est portée à un potentiel négatif.

Dans les exemples précédents, on a utilisé un accélérateur haute fréquence mis à la masse. Dans les exemples illustrés par les figures 12 et 13, on utilise un accélérateur haute fréquence, par exemple un Rhodotron, qui est porté à la haute tension et se trouve ainsi dans la tête haute tension, alors que le collecteur du faisceau d'électrons se trouve en dehors de la tête haute tension.

Dans le cas de la figure 12, on utilise une source d'ions positifs S1. Celle-ci et le Rhodotron 54 sont situés dans la tête haute tension 18 qui est portée à un potentiel positif. Le collecteur 58 du faisceau d'électrons et la cible réceptrice C1 du faisceau d'ions sont mis à la masse.

Dans le cas de la figure 13, on utilise une source d'ions négatifs S2. Le Rhodotron 54 et la cible réceptrice C2 du faisceau d'ions sont situés dans la tête haute tension 18 qui est portée à un potentiel positif. Le collecteur 58 du faisceau d'électrons et la source d'ions S2 sont mis à la masse.

Dans tous les exemples décrits jusqu'à présent, on a utilisé un accélérateur haute fréquence d'électrons, par exemple un Rhodotron. Cependant, dans d'autres exemples de réalisation de l'invention, on pourrait utiliser un accélérateur haute fréquence d'ions positifs ou d'ions négatifs pour fournir le courant de charge.

Les documents cités dans la présente description sont les suivants :

(1) Demande de brevet français n° 8707378 du 26 mai 1987, intitulée Accélérateur d'électrons à cavité coaxiale

(2) Demande de brevet français n° 8910144 du 27 juillet 1989, intitulée Laser à électrons libres à accélérateur d'électrons perfectionné

(3) De la physique des particules à l'agro-alimentaire, La Recherche, Décembre 1990, vol.21, p.1464

(4) L.R. Elias, Electrostatic accelerator free electron lasers, SPIE, vol.738 (FEL 1987)

(5) L.R. Elias, Electrostatic accelerators for free electron lasers, Nuclear Instruments and Methods in Physics Research, A 287 (1990), p.79 à 86

(6) L.R. Elias et al., The UCSB electrostatic accelerator free electron laser : first operation, Nuclear Instruments and Methods in Physics Research, A 237 (1985), p.203 à 206

(7) G. Ramian et L. R. ELias, The new UCSB compact far infrared FEL, Nuclear Instruments and Methods in Physics Research, A 272 (1988), p.81 à 88

(8) J.M. Helleboid, A charging system for the Vivitron, Nuclear Instruments and Methods in Physics Research, A 287 (1990), p.99 à 102

(9) R.G. Herb, Pelletron accelerators for very high voltage, Nuclear Instruments and Methods, 122 (1974), p.267 à 276

(10) K. Sato et al., Performance of the Yale tandem accelerator, Nuclear Instruments and Methods, 122 (1974), p.129 à 142

(11) T.W. Haiken et al., The nuclear structure facility at Daresbury, Nuclear Instruments and Methods, 122 (1974), p.235 à 265

**Revendications**

1. Accélérateur électrostatique comprenant :
   - une colonne d'accélération (20),
   - une tête haute tension (18) située à une extrémité de cette colonne d'accélération (20), et
   - des moyens (54) de transport de charges électriques,

cet accélérateur électrostatique étant caractérisé en ce que les moyens de transport comprennent un accélérateur haute fréquence (54) apte à fournir un faisceau de charges électriques pour former le courant de charge de l'accélérateur électrostatique.

2. Accélérateur électrostatique selon la revendication 1, caractérisé en ce que l'accélérateur haute fréquence est un accélérateur haute fréquence d'électrons (54) qui est apte à fournir un faisceau d'électrons, et en ce que les moyens de transport de charges électriques comprennent en outre des moyens (56) d'amenée du faisceau d'électrons jusqu'à la tête haute tension (18), dans laquelle ces électrons s'accumulent, lesdites charges électriques étant constituées par les électrons fournis par cet accélérateur haute fréquence (54).

3. Accélérateur électrostatique selon la revendication 2, caractérisé en ce que l'accélérateur haute fréquence (54) est constitué par une structure comportant :
   - une cavité (CC) formée d'un conducteur cylindrique extérieur (64) et d'un conducteur cylindrique intérieur (66) qui sont coaxiaux,
   - une source haute fréquence (SHF) alimentant la cavité (CC) en champ électromagnétique à une fréquence de résonance de la cavité, la composante radiale du champ présentant un maximum dans au moins un plan perpendiculaire à l'axe commun au conducteur extérieur (64) et au conducteur intérieur (66), ces conducteurs extérieur et intérieur de la cavité étant percés d'ouvertures diamétralement opposées situées dans le plan pour l'introduction du faisceau d'électrons dans la cavité (CC) et son extraction dans ce plan,
   cet accélérateur haute fréquence (54) comprenant en outre au moins un déflecteur d'électrons (D1, D2) apte à dévier le faisceau d'électrons ayant traversé la cavité selon un diamètre tout en le gardant dans le plan et à le réinjecter dans la cavité selon un autre diamètre.

4. Accélérateur électrostatique selon l'une quelconque des revendications 2 et 3, caractérisé en ce que les moyens d'amenée du faisceau d'électrons comprennent une colonne (56) de décélération des électrons issus de l'accélérateur haute fréquence (54).

5. Accélérateur électrostatique selon l'une quelconque des revendications 2 à 4, caractérisé en ce qu'il est prévu pour accélérer des électrons et en ce qu'il comprend en outre des moyens de récupération des électrons qu'il a accélérés et qui ont ensuite été utilisés, ces moyens de récupération comprenant une colonne (22) de décélération de ces électrons qui ont été utilisés.

6. Accélérateur électrostatique selon la revendication 4, caractérisé en ce qu'il est prévu pour accélérer des électrons, en ce qu'il comprend en outre des moyens de récupération des électrons qu'il a accélérés et qui ont ensuite été utilisés, ces moyens de récupération comprenant une colonne de décélération de ces électrons qui ont été utilisés, en ce que les trois colonnes, à savoir la colonne d'accélération, la colonne de décélération que comprennent les moyens d'amenée et la colonne de décélération que comprennent les moyens de récupération, ont la même structure, et en ce que l'accélérateur électrostatique comprend un tube unique (108) en lequel les trois colonnes sont regroupées et qui est prévu pour l'accélération des électrons destinés à être fournis par cet accélérateur électrostatique, la décélération des électrons issus de l'accélérateur haute fréquence et la décélération des électrons qui ont été utilisés.

7. Accélérateur électrostatique selon la revendication 4, caractérisé en ce qu'il comprend en outre une source (S1) d'ions positifs destinés à être accélérés par la colonne d'accélération (20), l'accélérateur haute fréquence et la source d'ions étant mises à la masse, la tête haute tension étant portée à un potentiel négatif.

8. Accélérateur électrostatique selon la revendication 4, caractérisé en ce qu'il comprend en outre une source (S2) d'ions négatifs destinés à être accélérés par la colonne d'accélération (20), cette source étant placée dans la tête haute tension (18), cette dernière étant portée à un potentiel négatif, l'accélérateur haute fréquence étant mis à la masse.

9. Accélérateur électrostatique selon la revendication 1, caractérisé en ce que l'accélérateur haute fréquence est un accélérateur haute fréquence d'électrons placé dans la tête haute tension et apte à fournir un faisceau d'électrons, ces derniers constituant lesdites charges électriques, en ce que l'accélérateur électrostatique comprend en outre des moyens de collection du faisceau d'électrons, ces moyens de collection étant mis à la masse et en ce que les moyens de transport comprennent en outre une colonne de décélération des électrons issus de l'accélérateur haute fréquence, pour amener ceux-ci aux moyens de collection.

**10.** Accélérateur électrostatique selon la revendication 9, caractérisé en ce qu'il comprend en outre une source d'ions destinés à être accélérés par la colonne d'accélération.

**11.** Laser à électrons libres comprenant :
- un accélérateur électrostatique d'électrons, apte à fournir un faisceau d'électrons, et
- un onduleur magnétique (4) qui est traversé par ce faisceau d'électrons,

ce laser à électrons libres étant caractérisé en ce que l'accélérateur électrostatique est conforme à l'une quelconque des revendications 2 à 6.

**12.** Laser à électrons libres selon la revendication 11, caractérisé en ce que l'accélérateur électrostatique est conforme à l'une quelconque des revendications 5 et 6, en ce que les moyens de récupération sont prévus pour récupérer les électrons qui ont traversé l'onduleur magnétique (4), la colonne de décélération (22), que comprennent ces moyens de récupération, communiquant avec cet onduleur magnétique (4).

**Patentansprüche**

**1.** Elektrostatischer Beschleuniger, umfassend:
- eine Beschleunigungskolonne bzw. -säule (20),
- einen Hochspannungskopf (18), an einem Ende dieser Beschleunigungsäule (20) befindlich, und
- Übertragungseinrichtungen (54) für elektrische Ladungen,

wobei dieser elektrostatische Beschleuniger **dadurch gekennzeichnet** ist, daß die Übertragungseinrichtungen einen Hochfrequenzbeschleuniger (54) umfassen, der ein Bündel elektrischer Ladungen zum Bilden des Ladestroms des elektrostatischen Beschleunigers liefern kann.

**2.** Elektrostatischer Beschleuniger nach Anspruch 1, dadurch gekennzeichnet, daß der Hochfrequenzbeschleuniger ein Elektronen-Hochfrequenzbeschleuniger (54) ist, fähig einen Elektronenstrahl zu liefern, und dadurch, daß die übertragungseinrichtungen von elektrischen Ladungen außerdem Einrichtungen (56) für die Zuführung des Elektronenstrahls zum Hochspannungskopf (18) umfassen, in dem diese Elektronen sich aufspeichern, wobei die genannten elektrischen Ladungen gebildet werden durch diesen Hochfrequenzbeschleuniger (54).

**3.** Elektrostatischer Beschleuniger nach Anspruch 2, dadurch gekennzeichnet, daß der Hochfrequenzbeschleuniger (54) gebildet wird durch eine Struktur, umfassend:
- einen Resonator (CC), gebildet durch einen zylindrischen Außenleiter (64) und einen zylindrischen Innenleiter (66), die koaxial sind,
- eine den Resonator (CC) mit einem elektromagnetischen Feld versorgende Hochfrequenzquelle (SHF), wobei die Radialkomponente des Feldes ein Maximum aufweist in wenigstens einer zur gemeinsamen Achse des Außenleiters (64) und des Innenleiters (66) senkrechten Ebene und diese Außen- und Innenleiter des Resonators durchdrungen sind von diametral entgegengesetzten öffnungen,

befindlich in der Ebene der Einleitung des Elektronenstrahl in den Resonator (CC) und seiner Entfernung in dieser Ebene, wobei dieser Hochfrequenzbeschleuniger (54) außerdem wenigstens einen Elektronendeflektor bzw. -ablenker (D1, D2) umfaßt, geeignet, den Elektronenstrahl, der den Resonator gemäß einem Durchmesser durchquert hat, abzulenken, ihn dabei in der Ebene zu halten und ihn einem anderen Durchmesser entsprechend wieder einzuleiten in den Resonator.

**4.** Elektrostatischer Beschleuniger nach einem der Ansprüche 2 und 3, dadurch gekennzeichnet, daß die Zuleitungseinrichtungen des Elektronenstrahls eine Bremsungskolonne bzw. - säule (56) der aus dem Hochfrequenzbeschleuniger (54) kommenden Elektronen umfaßt.

**5.** Elektrostatischer Beschleuniger nach einem der Anpsrüche 2 bis 4, dadurch gekennzeichnet, daß er vorgesehen ist zum Beschleunigen von Elektronen und dadurch, daß er außerdem Einrichtungen zur Rückgewinnung der Elektronen umfaßt, die er beschleunigt hat und die anschließend benutzt wurden, wobei diese Rückgewinnungseinrichtungen eine Bremsungssäule (22) dieser Elektronen, die benutzt wurden, umfassen.

**6.** Elektrostatischer Beschleuniger nach Anspruch 4, dadurch gekennzeichnet, daß er vorgesehen ist zum Beschleunigen von Elektronen und dadurch, daß er außerdem Einrichtungen zur Rückgewinnung der Elektronen umfaßt, die er beschleunigt hat und die anschließend benutzt wurden, wobei diese Rückgewinnungseinrichtungen eine Bremsungssäule dieser benutzten Elektronen umfassen, dadurch, daß die drei Säulen, nämlich die Beschleunigungssäule, die Bremsungssäule, die die Zuleitungseinrichtungen umfassen und die Bremsungssäule, die die Rückgewinnungseinrichtungen umfassen, dieselbe Struktur haben, und dadurch, daß der elektrostatische Beschleuniger eine einzige Röhre (108) umfaßt, in der die drei Säulen zusammengefaßt sind und die vorgesehen ist für die Beschleunigung der Elektronen, die durch diesen elektrostatischen Beschleuniger geliefert werden, die Bremsung der aus dem Hochfrequenzbeschleuniger kommenden Elektronen und die Bremsung der Elektronen, die benutzt worden sind.

7.  Elektrostatischer Beschleuniger nach Anspruch 4, dadurch gekennzeichnet, daß er außerdem eine Quelle (S1) positiver Ionen umfaßt, die durch die Beschleunigungssäule (20) beschleunigt werden, wobei der Hochfrequenzbeschleuniger und die Ionenquelle an Masse gelegt und der Hochspannungskopf auf ein negatives Potential gebracht wird.

8.  Elektrostatischer Beschleuniger nach Anspruch 4, dadurch gekennzeichnet, daß er außerdem eine Quelle (S2) positiver Ionen umfaßt, die durch die Beschleunigungssäule (20) beschleunigt werden, wobei diese Quelle in dem Hochspannungskopf (18) angeordnet ist, dieser letztere auf ein negatives Potential gebracht und der Hochfrequenzbeschleuniger an Masse gelegt wird.

9.  Elektrostatischer Beschleuniger nach Anspruch 1, dadurch gekennzeichnet, daß der Hochfrequenzbeschleuniger ein in dem Hochspannungskopf angeordneter Elektronen-Hochfrequenzbeschleuniger ist, fähig einen Elektronenstrahl zu liefern, wobei diese Elektronen die besagten elektrischen Ladungen bilden, dadurch, daß der elektrostatische Beschleuniger außerdem Sammlungseinrichtungen des Elektronenstrahls umfaßt, wobei diese Sammlungseinrichtungen an Masse gelegt sind und dadurch, daß die übertragungseinrichtungen außerdem eine Bremsungssäule für die Elektronen umfassen, die aus dem Hochfrequenzbeschleuniger kommen, um diese den Sammlungseinrichtungen zuzuführen.

10. Elektrostatischer Beschleuniger 9, dadurch gekennzeichnet, daß er außerdem eine Quelle für Ionen umfaßt, dazu bestimmt, durch die Beschleunigungssäule beschleunigt zu werden.

11. Freielektronenlaser, umfassend:
    - einen elektrostatischen Elektronenbeschleuniger, fähig einen Elektronenstrahl zu liefern, und
    - einen magnetischen Wellenformer (4), der von diesem Elektronenstrahl durchquert wird,

wobei dieser Freielektronenlaser **dadurch gekennzeichnet** ist, daß der elektrostatische Beschleuniger mit einem der Ansprüche 2 bis 6 übereinstimmt.

12. Freielektronenlaser nach Anspruch 11, dadurch gekennzeichnet, daß der elektrostatische Beschleuniger einem der Ansprüche 5 und 6 entspricht, dadurch, daß die Rückgewinnungseinrichtungen vorgesehen sind, um die Elektronen zurückzugewinnen, die den magnetischen Wellenformer (4) durchquert haben, wobei die Bremsungssäule (22), die diese Rückgewinnungseinrichtungen umfassen, mit diesem magnetischen Wellenformer verbunden ist.

**Claims**

1.  Electrostatic accelerator comprising an accelerating column (20), a high voltage terminal (18) located at one end of said accelerating column (20) and electric charge transport means (54), said electrostatic accelerator being characterized in that the transport means incorporate a high frequency accelerator (54) able to supply an electric charge beam for forming the charging current of the electrostatic accelerator.

2.  Electrostatic accelerator according to claim 1, characterized in that the high frequency accelerator is a high frequency electron accelerator (54) able to supply an electron beam and in that the electric charge transport means also incorporate means (56) for supplying the electron beam to the high voltage terminal (18) in which said electrons accumulate, said electric charges being constituted by electrons supplied by said high frequency accelerator (54).

3.  Electrostatic accelerator according to claim 2, characterized in that the high frequency accelerator (54) is constituted by a structure having a cavity (CC) formed by an external cylindrical conductor (64) and an internal cylindrical conductor (66), which are coaxial to one another, a high frequency source (SHF) supplying the cavity (CC) with an electromagnetic field at a resonant frequency of the cavity, the radial component of the field having a maximum in at least one plane perpendicular to the axis common to the external conductor (64) and the internal conductor (66), said external and internal conductors of the cavity having diametrically opposite openings located in the plane for the introduction of the electron beam into the cavity (CC) and for its extraction in said plane, the high frequency accelerator (54) also incorporating at least one electron deflector (D1, D2) able to deflect the electron beam which has traversed the cavity along a diameter, whilst keeping it in the plane and then reinjecting it into the cavity along another diameter.

4. Electrostatic accelerator according to one of the claims 2 or 3, characterized in that the electron beam supply means incorporate a column (56) for decelerating the electrons from the high frequency accelerator (54).

5. Electrostatic accelerator according to any one of the claims 2 to 4, characterized in that it serves to accelerate electrons and in that it also comprises means for recovering electrons which it has accelerated and which have then been used, said recovery means incorporating a column (22) for decelerating the electrons which have been used.

6. Electrostatic accelerator according to claim 4, characterized in that it serves to accelerate electrons, in that it also comprises means for the recovery of electrons which it has accelerated and which have then been used, said recovery means incorporating a column for decelerating said electrons which have been used, in that the three columns, namely the accelerating column, the decelerating column incorporated in the supply means and the decelerating column incorporated into the recovery means, have the same structure and in that the electrostatic accelerator comprises a single tube (108) in which the three columns are grouped and serves to accelerate electrons to be supplied by said electrostatic accelerator, for the deceleration of electrons from the high frequency accelerator and for the deceleration of electrons which have been used.

7. Electrostatic accelerator according to claim 4, characterized in that it also comprises a source (S1) of positive ions to be accelerated by the accelerating column (20), the high frequency accelerator and the ion source being grounded, the high voltage terminal being brought to a negative potential.

8. Electrostatic accelerator according to claim 4, characterized in that it also comprises a source (S2) of negative ions for acceleration by the accelerating column (20), said source being placed in the high voltage terminal (18), the latter being brought to a negative potential, the high frequency accelerator being grounded.

9. Electrostatic accelerator according to claim 1, characterized in that the high frequency accelerator is a high frequency electron accelerator placed in the high voltage terminal and able to supply an electron beam, the latter constituting the said electric charges, in that the electrostatic accelerator also comprises means for collecting the electron beam, said collecting means being grounded and in that the transport means also incorporate a column for decelerating the electrons from the high frequency accelerator in order to bring them to the collecting means.

10. Electrostatic accelerator according to claim 9, characterized in that it also comprises a source of ions to be accelerated by the accelerating column

11. Free electron laser incorporating an electron electrostatic accelerator able to supply an electron beam and a magnetic wiggler (4) traversed by said electron beam, said free electron laser being characterized in that the electrostatic accelerator is in accordance with any one of the claims 2 to 6.

12. Free electron laser according to claim 11, characterized in that the electrostatic accelerator is in accordance with any one of the claims 5 and 6, in that the recovery means recover electrons which have traversed the magnetic wiggler (4), the decelerating column (22) incorporated in said recovery means being linked with the magnetic wiggler (4).

FIG. 1

FIG. 2

FIG. 3

FIG. 4

FIG. 5

FIG. 6

96  20 (22 _ 56)

94

FIG. 7

104  110

Ef

98

58

102

106

FIG. 8

FIG. 9

FIG. 10

FIG. 11

FIG. 12

FIG. 13

21